# EUROPEAN PATENT APPLICATION

(11) **EP 4 714 611 A1**
(43) Date of publication of application: **25.03.2026**
(21) Application number: 25201901.3
(22) Date of filing: 12.09.2025
(51) Int. Cl.: B25J 9/00

(54) **ROBOT, ROBOT CONTROL METHOD, AND PROGRAM**

(30) Priority: 20.09.2024 JP 2024163641
(71) Applicant: Casio Computer Co., Ltd., Tokyo 151-8543 (JP)
(72) Inventor: Mayuzumi, Kouki, Hamura-shi, Tokyo, 205-8555 (JP); Hasegawa, Hirokazu, Hamura-shi, Tokyo, 205-8555 (JP); Yamada, Shunsuke, Hamura-shi, Tokyo, 205-8555 (JP)
(74) Representative: Grünecker Patent- und Rechtsanwälte PartG mbB

(57) **Abstract**

Disclosed is a robot including: a base part; a movable part attached to the base part in a rotatable state around a predetermined rotation axis; an actuator to rotate the movable part around the rotation axis; and one or more processors that control orientation of the movable part around the rotation axis by controlling an operation of the actuator. The processors determine whether the orientation of movable part is within a predetermined angle range including a predetermined reference orientation, in response to determining that the orientation is within the predetermined angle range, the processors control the actuator to be in a first state in which the actuator does not restrict rotation of the movable part, and in response to determining that the orientation is not within the predetermined angle range, the processors control the actuator to be in a second state in which the actuator restricts the rotation.

## Description

### TECHNICAL FIELD

The present disclosure relates to a robot, a robot control method, and a program.

### DESCRIPTION OF RELATED ART

Conventionally, there is known the technology to control the movement of movable parts of robots by means of actuators such as servo motors (e.g., JP 2002-059389 A).

### SUMMARY OF THE INVENTION

However, when controlling the movement of the movable part by the actuator is stopped, in a state in which the movement of the movable part is not restricted, the movable part may move unintentionally due to external forces or its own weight.

A purpose of the present disclosure is to suppress unintended movements of movable parts.

In order to solve the above problem, a robot according to an aspect of the present disclosure is
a robot comprising:
a base part;
a movable part attached to the base part in a rotatable state around a predetermined rotation axis;
an actuator to rotate the movable part around the rotation axis; and
one or more processors that control an orientation of the movable part around the rotation axis by controlling an operation of the actuator, wherein
the one or more processors determine whether the orientation of the movable part is within a predetermined angle range including a predetermined reference orientation,
in response to determining that the orientation is within the predetermined angle range, the one or more processors control the actuator to be in a first state in which the actuator does not restrict rotation of the movable part, and
in response to determining that the orientation is not within the predetermined angle range, the one or more processors control the actuator to be in a second state in which the actuator restricts rotation of the movable part.

According to the present disclosure, unintended movements of movable parts can be suppressed.

### BRIEF DESCRIPTION OF DRAWINGS

FIG. 1 shows the appearance of a robot.
FIG. 2 is a schematic diagram of the robot's main body.
FIG. 3 shows a block diagram of the robot's functional configuration.
FIG. 4 shows the main body of the robot under head horizontal control around a first rotation axis.
FIG. 5 shows the main body of the robot under head horizontal control around the first rotation axis.
FIG. 6 shows the main body of the robot in a basic posture, viewed from the front.
FIG. 7 shows the main body of the robot under head horizontal control around a second rotation axis.
FIG. 8 shows the main body of the robot under head horizontal control around the second rotation axis.
FIG. 9 shows a first angle range.
FIG. 10 shows a second angle range.
FIG. 11 is a flowchart showing the control procedure of robot control process.
FIG. 12 is a flowchart showing the control procedure of head horizontal control process.
FIG. 13 is a flowchart showing the control procedure of braking control process.

### DETAILED DESCRIPTION

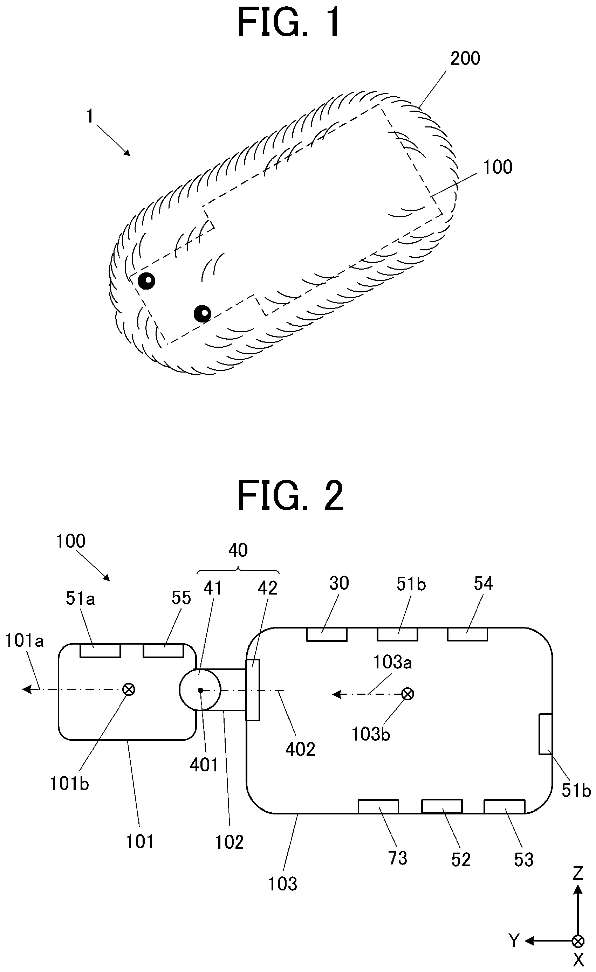

The following is a description of an embodiment of the present disclosure based on the drawings. As shown in FIG. 1, a robot 1 includes a main body 100 and an exterior 200 that covers the entire surface of the main body 100. The robot 1 is a pet robot that mimics a small living creature. The robot 1 can perform multiple actions that differ from each other to mimic the gestures of living creatures. The exterior 200 is made of a flexible material and deforms in response to the movement of the main body 100. The exterior 200 has, for example, fur formed by pile fabric and decorative members that imitate eyes. The back surface of the exterior 200 (the surface in contact with the main body 100) is provided with unillustrated engagement portions that can be engaged with unillustrated clasps provided on the surface of the main body 100. By engaging the engagement portions to the clasps, the main body 100 and the exterior 200 can be prevented from shifting significantly. The number of engagement portions and clasps is kept to a minimum so as not to interfere with the movement of the main body 100 and to facilitate the attachment and detachment of the exterior 200. In the present embodiment, the engagement portions and clasps are provided at the left and right eye positions of the robot 1, and at the back end, for a total of three locations.

As shown in FIG. 2, the main body 100 of the robot 1 has a head 101 as a movable part, a torso 103 as a base part, and a connection 102 that connects the head 101 and torso 103. In the following, the XYZ coordinate system, defined by the X and Y axes parallel to the horizontal plane and the Z axis pointing vertically upward, is used to describe the posture and orientation of the robot 1. In FIG. 2, the robot 1 is assumed to be placed on a horizontal plane in such an orientation that its left-right direction (width direction) is parallel to the X-axis direction. The head 101 is attached to the torso 103 so as to be rotatable around the first rotation axis 401 and second rotation axis 402, respectively. The second rotation axis 402 is parallel to the direction of extension of the connection 102 and parallel to the Y-axis direction in FIG. 2. The first rotation axis 401 intersects (orthogonal to in the present embodiment) the second rotation axis 402 and is parallel to the X-axis direction in FIG. 2. The direction parallel to the second rotation axis 402 is the front-back direction of the robot 1. The direction parallel to the front-back direction and from the torso 103 to the head 101 is the front direction. The direction perpendicular to the second rotation axis 402 and parallel to the horizontal plane when the robot 1 is placed on the horizontal plane is the left-right direction of the robot 1. In FIG. 2, the +Y direction is the front direction and the +X direction is the right direction. In the following, the virtual axis fixed to the torso 103, parallel to the front-back direction and toward the front, is referred to as "front-back axis 103a," and the axis parallel to the left-right direction and toward the right is referred to as "left-right axis 103b". The virtual axis fixed to the head 101, which is parallel to the front-back direction and towards the front when the robot 1 is in the predetermined basic posture, is described as "front-back axis 101a," and the axis parallel to the left-right direction and towards the right when the robot 1 is in the basic posture is described as "left-right axis 101b". The basic posture is the posture shown in FIG. 2, in which the robot 1 appears to be facing forward without tilting its head 101. The left-right axis 101b of the head 101 is parallel to the first rotation axis 401. The orientation of the front-back axis 101a corresponds to the orientation of the head 101 around the first rotation axis 401. The orientation of the left-right axis 101b corresponds to the orientation of the head 101 around the second rotation axis 402.

The main body 100 has a drive unit 40 for moving the head 101 against the torso 103. The drive unit 40 has an up-and-down movement motor 41 (first actuator) and a twist motor 42 (second actuator). The up-and-down movement motor 41 is a servo motor that rotates the head 101 around the first rotation axis 401. For example, the first rotation axis 401 of the up-and-down movement motor 41 is fixed to the connection 102, and the servo horn of the up-and-down movement motor 41 is attached to the head 101. Here, the servo horn is a part that rotates in conjunction with the rotation axis of the servo motor and transmits the rotary motion of the servo motor to the outside. The up-and-down movement motor 41 enables the robot 1 to move its head 101 up and down. The up and down movement of the head 101 by the robot 1 causes the front-back axis 101a of the head 101 to be in a direction intersecting the horizontal plane. The twist motor 42 is a servo motor that rotates the head 101 and the connection 102 around the second rotation axis 402. For example, the second rotation axis 402 of the twist motor 42 is fixed to the torso 103, and the servo horn of the twist motor 42 is attached to the connection 102. The operation of the twist motor 42 enables the robot 1 to twist its head 101. The twisting movement of the head 101 by the robot 1 causes the left-right axis 101b of the head 101 to be in a direction intersecting the horizontal plane. Depending on the angle of twist of the head 101 by the twist motor 42, the direction of up-and-down movement of the head 101 can be inclined with respect to the vertical direction. By operating the up-and-down movement motor 41 and/or twist motor 42 in a finely periodic manner, the robot 1 is able to achieve a shaking or trembling motion of the head 101. By changing the timing, size, and speed of the operations of the up-and-down movement motor 41 and the twist motor 42, and combining them as appropriate, the robot 1 can be made to perform a variety of actions, for example, joyful actions, surprised actions, breathing actions that mimic the breathing of a living creature, and so on. Among these, the breathing action is a form of spontaneous action by the robot 1.

As shown in FIG. 2, the main body 100 has a first touch sensor 51a, second touch sensors 51b, an acceleration sensor 52, a gyro sensor 53, an illuminance sensor 54, a microphone 55, a sound output unit 30, and a power receiving coil 73. The first touch sensor 51a is provided on the top of the head 101. The second touch sensors 51b are provided on the top and side of the torso 103, respectively. In the following, when referring to any one of the first touch sensor 51a and the second touch sensors 51b, it is referred to as "touch sensor 51". The acceleration sensor 52, gyro sensor 53, and power receiving coil 73 are provided near the underside of the torso 103. The illuminance sensor 54 and the sound output unit 30 are provided on the top of the torso 103. The microphone 55 is provided on the top of the head 101 near the base of the head.

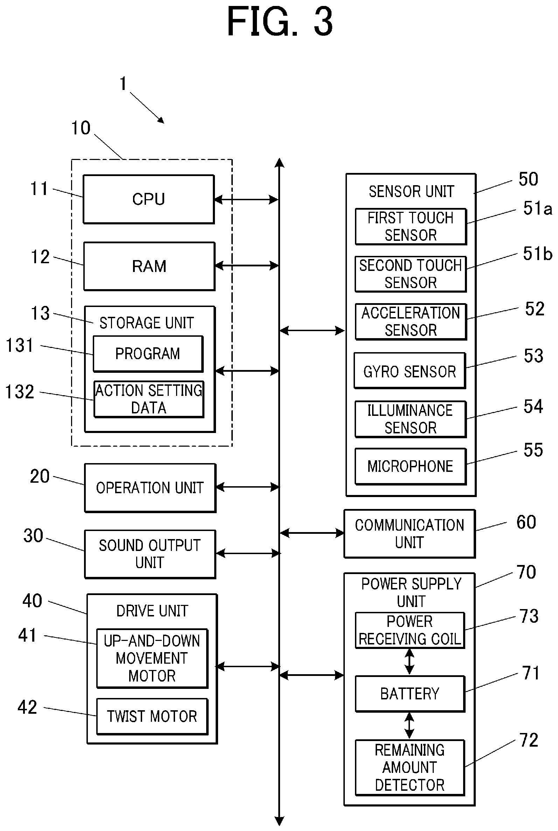

As shown in FIG. 3, the robot 1 includes a CPU 11 (Central Processing Unit) (one or more processors, processing means), a RAM 12 (Random Access Memory), a storage unit 13, an operation unit 20, the sound output unit 30, the drive unit 40, a sensor unit 50, a communication unit 60, and a power supply unit 70. Each unit of the robot 1 is connected via a bus or other data transmission path. Each of the functional configurations shown in FIG. 3 is provided in the main body 100. The CPU 11, RAM 12, and storage unit 13 constitute a robot control device 10 that controls the action of the robot 1.

The CPU 11 is a processor that reads and executes a program 131 stored in the storage unit 13 and performs various arithmetic operations to control the action of robot 1. The robot 1 may have multiple processors (e.g., multiple CPUs), and the multiple processes executed by the CPU 11 in the present embodiment may be executed by the multiple processors. In this case, one or more processors are constituted by multiple processors. In this case, multiple processors may be involved in a common process, or they may independently execute different processes in parallel. The RAM 12 provides working memory space for the CPU 11 and stores temporary data.

The storage unit 13 is a non-transitory recording medium readable by the CPU 11 as a computer and stores the program 131 and various data. The storage unit 13 includes nonvolatile memory, such as flash memory, for example. The program 131 is stored in the storage unit 13 in the form of computer-readable program code. The data stored in the storage unit 13 includes action setting data 132. The action setting data 132 contains the set action contents such as communication action performed by the robot 1 according to the state of robot 1 and the contents of external stimulus, as well as the automatically generated actions that the robot 1 performs spontaneously without external stimulus, and the breathing action. The automatically generated action can be described as a whimsical action, since the robot 1 appears to be behaving in a whimsical manner. Settings pertaining to the action contents include, for example, settings for the timing and amount of operations of the up-and-down movement motor 41 and twist motor 42 of the drive unit 40, as well as the pitch (height), length, and volume of the sound output by the sound output unit 30.

The operation unit 20 includes operation buttons and knobs for turning the power on and off, adjusting the volume of the sound output by the sound output unit 30, and so on. The operation unit 20 outputs operation information to the CPU 11 in response to input operations to operation buttons and knobs. The sound output unit 30 includes a speaker and outputs sound at a pitch (height), length, and volume according to control signals and sound data transmitted from the CPU 11. The sound may be a sound that imitates the cry of a living creature.

The drive unit 40 operates the up-and-down movement motor 41 and the twist motor 42 according to the control signals transmitted from the CPU 11. As mentioned above, the up-and-down movement motor 41 and the twist motor 42 are both servo motors. The servo motor includes a motor with a rotor that rotates inside a stator, a driver that supplies power to the motor to drive it, and an encoder that detects the rotation angle (rotation position) of the rotor. The stator has multiple windings in positions surrounding the rotor. A magnetic field is generated at the position of the rotor in response to the current supplied from the driver to the windings, and the rotor rotates under force due to changes in this magnetic field. The detection result of the rotation angle of the rotor by the encoder is fed back to the driver, which drives the motor so that the rotation angle of the rotor becomes the angle indicated by the CPU 11. The servo motor with such a mechanism can rotate the movable part which is the target to be moved (in the present embodiment, the head 101) in the indicated orientation and perform angle control to maintain that orientation. If the orientation of the movable part tries to change due to external force or its own weight while the servo motor is performing the angle control, the feedback control works so that the servo motor operates not to cause the orientation change. Thus, the orientation of the movable part is maintained in the indicated orientation. This action of maintaining the orientation of the movable part can also be a braking action on the movable part. In other words, the servo motor can restrict the rotation of the movable part from the indicated orientation by performing the angle control. When the power supply to the servo motor is stopped, the angle control is no longer performed, and the action of restricting the rotation of the movable part also stops working. The state in which the servo motor is not performing the angle control corresponds to a first state in which the rotation of the movable part is not restricted. The state in which the servo motor is performing the angle control corresponds to a second state in which the rotation of the movable part is restricted.

The sensor unit 50 includes the first touch sensor 51a, second touch sensors 51b, acceleration sensor 52, gyro sensor 53, illuminance sensor 54, and microphone 55 described above, and outputs the detection results by each sensor and microphone 55 to the CPU 11. The touch sensor 51 detects that a user or other object contacts the robot 1. The touch sensor 51 includes a pressure sensor or a capacitance sensor, for example, and outputs detection data pertaining to the presence or absence of contact with the robot 1 to the CPU 11. The acceleration sensor 52 detects acceleration for each of the three orthogonal axis directions and outputs the detection data to the CPU 11. The gyro sensor 53 detects angular velocity around each of the three orthogonal axis directions and outputs the detection data to the CPU 11. The illuminance sensor 54 detects the brightness around the robot 1 and outputs the detection data to the CPU 11. The microphone 55 detects sounds around the robot 1 and outputs the detected sound data to the CPU 11.

The communication unit 60 is a communication module with an antenna, modulation and demodulation circuits, signal processing circuits, etc., and performs wireless data communication with external devices in accordance with predetermined communication standards.

The power supply unit 70 includes a battery 71, a remaining amount detector 72, and a power receiving coil 73. The battery 71 supplies power to each unit of the robot 1. The battery 71 in the present embodiment is a rechargeable battery that can be repeatedly recharged using a non-contact recharging method. The remaining amount detector 72 detects the remaining battery amount of battery 71 according to the control signal transmitted from the CPU 11 and outputs the detection result to the CPU 11. The recharging operation of the battery 71 is performed with the robot 1 stored (set) inside a dedicated power feeder (storage unit, charging dock), which is not shown in the drawings. The power feeder includes a power transmitting coil for recharging the battery 71 by electromagnetic induction at a position opposite to the power receiving coil 73 when the robot 1 is stored.

The action of robot 1 is described next. When an external stimulus is detected by each sensor or microphone 55 of the sensor unit 50, the CPU 11 of robot 1 causes the robot 1 to perform a communication action in response to the detected external stimulus. In detail, the CPU 11 specifies which of several actions (approaches), such as touching, holding, or talking by the user, has caused the detected external stimulus, and causes the robot 1 to perform the communication action corresponding to the specified action. In other words, the CPU 11 operates the drive unit 40 according to the setting contents of communication action to output sound from the sound output unit 30. The communication action corresponding to each user action is predetermined and registered in the action setting data 132. When no external stimulus is detected by the sensor unit 50 and the execution condition for the automatically generated action is met, the CPU 11 causes the robot 1 to perform the predetermined automatically generated action. The automatically generated action may be an action generated by randomly determining the operation contents of the drive unit 40 and sound output unit 30, or it may be an action for which the operation contents of the drive unit 40 and sound output unit 30 are predetermined and registered in the action setting data 132. The communication action and automatically generated action include, for example, actions of nodding, looking up, twisting the neck, etc. The nodding action is an action in which the head 101 is rotated around the first rotation axis 401 from the basic posture shown in FIG. 2 so that the front-back axis 101a of the head 101 points downward from the horizontal plane, and then returns to the basic posture. The look-up action is an action in which the head 101 is rotated around the first rotation axis 401 from the basic posture shown in FIG. 2 so that the front-back axis 101a of the head 101 points upward from the horizontal plane, and then returns to the basic posture. The neck-twisting action is an action in which the head 101 is rotated around the second rotation axis 402 from the basic posture shown in FIG. 2 so that the left-right axis 101b of the head 101 are repeatedly tilted upward and downward with respect to the horizontal plane, and then returns to the basic posture.

In the stationary state of the robot 1 after the communication action or automatically generated action is completed and the robot 1 returns to the basic posture, the power supply to the up-and-down movement motor 41 and the twist motor 42 is stopped for the purpose of reducing power consumption. As a result, the angle control described above by the up-and-down movement motor 41 and the twist motor 42 does not work. In other words, the up-and-down movement motor 41 and the twist motor 42 move to the first state in which the rotation of the head 101 is not restricted.

In addition to the communication action and the automatically generated action, the robot 1 performs head horizontal control to mimic the properties of living creatures. In general, when the posture of its torso (tilt with respect to the horizontal plane) changes, a living creature exhibits a physiological reflex (recovery reaction) to maintain the angle of its head with respect to the horizontal plane regardless of the change in the posture of its torso. In other words, the living creature has the property of maintaining the angle of its head with respect to the horizontal plane by changing the angle of its head with respect to its torso in the opposite orientation by a certain angle when the angle of its torso with respect to the horizontal plane changes by the certain angle. Considering such living creature's recovery reaction, if the posture of the head 101 simply followed the posture of the torso 103 of the robot 1 when it changed, it would be unnatural for the living creature's movement. Therefore, the CPU 11 of the robot 1 in the present embodiment performs the following head horizontal control to maintain the posture of the head 101 when it detects a change in the posture of the torso 103 so that the living creature's recovery reaction is reproduced.

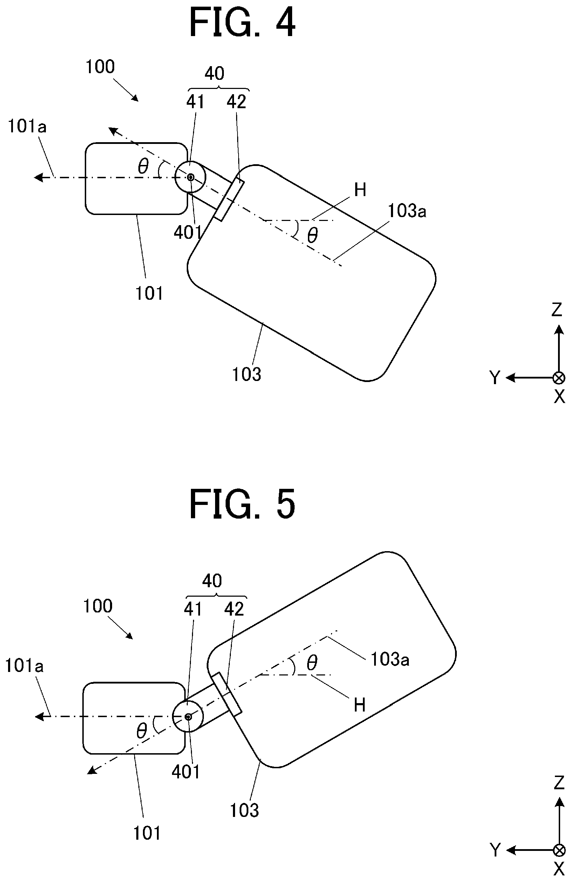

For example, if the front-back axis 103a of the torso 103 changes by an angle θ from the horizontal plane H so that the back of the torso 103 is lowered as shown in FIG. 4from the state in which the robot 1 is placed on the horizontal plane and in the basic posture as shown in FIG. 2, the CPU 11 operates the up-and-down movement motor 41 to rotate the head 101 by the angle θ in the opposite orientation to that of the torso 103. As a result, the front-back axis 101a of the head 101 remains parallel to the horizontal plane H. When the front-back axis 103a of the torso 103 changes by an angle θ from the horizontal plane H from the state shown in FIG. 2 so that the back of the torso 103 is raised, as shown in FIG. 5, the CPU 11 operates the up-and-down movement motor 41 to rotate the head 101 by the angle θ in the opposite orientation to the torso 103. As a result, the robot 1 maintains a posture in which the front-back axis 101a of the head 101 is parallel to the horizontal plane H. The angle θ of the front-back axis 103a of the torso 103 with respect to the horizontal plane H is derived by the CPU 11, for example, based on the detection data of the acceleration sensor 52 and the gyro sensor 53.

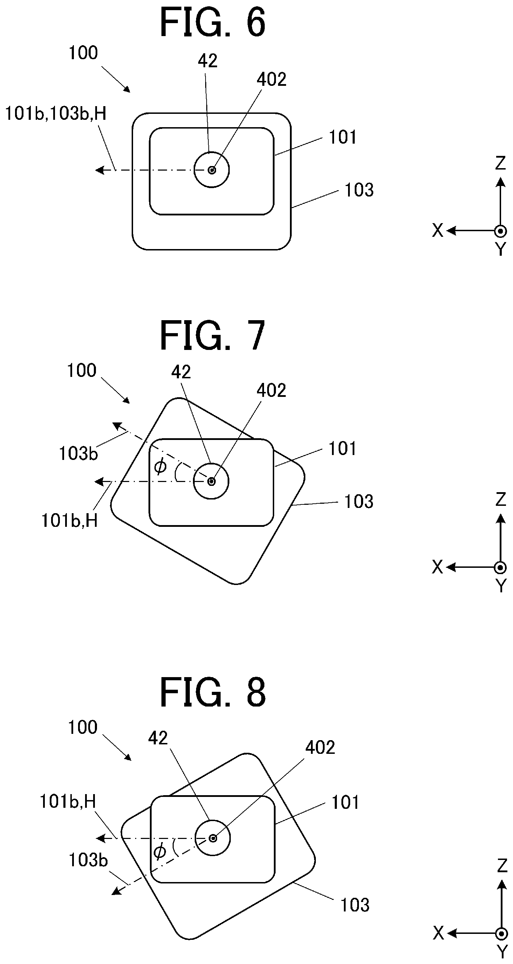

If, from the state in which robot 1 is placed on the horizontal plane and in the basic posture as shown in FIG. 6, the left-right axis 103b of the torso 103 change by an angle φ from the horizontal plane H so that the right side of the torso 103 is raised, as shown in FIG. 7, the CPU 11 operates the twist motor 42 to cause the head 101 to rotate by the angle φ in the opposite orientation to the torso 103. As a result, the left-right axis 101b of the head 101 remains parallel to the horizontal plane H. If, from the state shown in FIG. 6, the left-right axis 103b of the torso 103 changes from the horizontal plane H by an angle φ so that the right side of the torso 103 is lowered, as shown in FIG. 8, the CPU 11 operates the twist motor 42 to rotate the head 101 by the angle φ in the opposite orientation to the torso 103. As a result, the robot 1 maintains a posture in which the left-right axis 101b of the head 101 are parallel to the horizontal plane H. The angle φ of the left-right axis 103b of the torso 103 relative to the horizontal plane H is derived by the CPU 11, for example, based on the detection data of the acceleration sensor 52 and the gyro sensor 53.

When the posture change of the torso 103 stops in the state shown in FIGS. 4, 5, 7, and 8, the amount of change (e.g., angle of change) of the front-back axis 101a and/or the left-right axis 101b from the basic posture is set as the offset value, and that state is set as the tentative basic posture. The subsequent communication action and automatically generated action are then performed based on the tentative basic posture. For example, the nodding action performed after the state shown in FIG. 4 is an action in which the head 101 returns to the tentative basic posture shown in FIG. 4 after the head 101 rotates in a direction in which the angle of rotation of the front-back axis 101a downward is even larger than the angle θ.

In the tentative basic postures shown in FIGS. 4, 5, 7, and 8, the head 101 orientation relative to the torso 103 orientation is different from the original basic posture shown in FIG. 2. In detail, in FIGS. 4 and 5, the orientation of the front-back axis 101a of the head 101 relative to the orientation of the front-back axis 103a of the torso 103 is different from the original basic posture. In FIGS. 7 and 8, the orientation of the left-right axis 103b of the head 101 relative to the orientation of the left-right axis 103b of the torso 103 is different from the original basic posture. Therefore, in the tentative basic posture, the forces (tensile, frictional, etc.) that the head 101 receives from the exterior 200 tend to be larger than the tensile force received in the original basic posture. This is because the exterior 200 is designed to fit the outline of the main body 100 best in its original basic posture, i.e., to be less subject to the force against the head 101. Therefore, in the tentative basic posture, the force oriented to return the robot 1 to its original basic posture is likely to be applied to the head 101 from the exterior 200. Therefore, when the robot 1 is stationary in a tentative basic posture, if the power supply to the up-and-down movement motor 41 and the twist motor 42 is stopped and the angle control does not work (the first state in which the rotation of the head 101 is not restricted), the orientation of the head 101 may be changed by the force received from the exterior 200. This causes the head 101 to appear to be moving unintentionally.

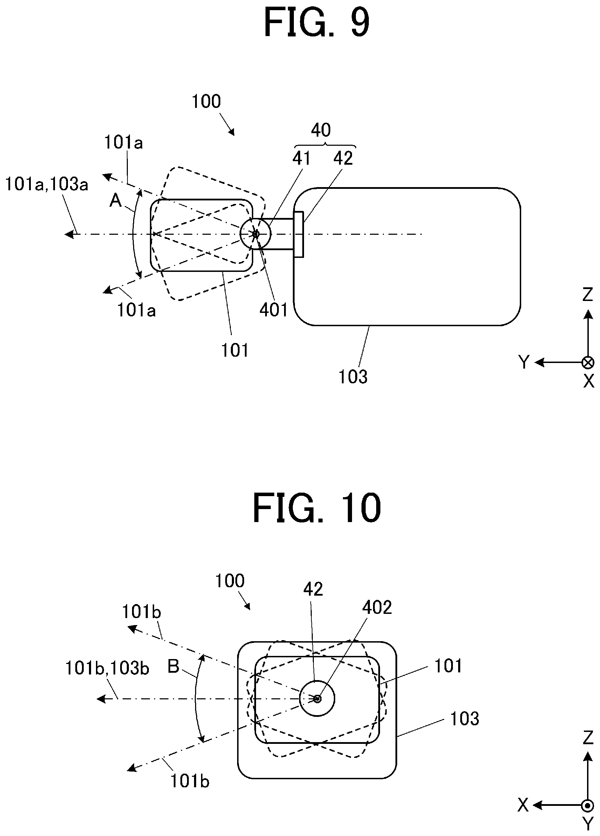

Therefore, the CPU 11 of the robot 1 in the present embodiment performs the following control when the rotation of the head 101 is stopped. In other words, when the CPU 11 stops the rotation of the head 101 around the first rotation axis 401, it determines whether or not the orientation of the front-back axis 101a of the head 101 (orientation around the first rotation axis 401) is within the first angle range A shown in FIG. 9. The first angle range A includes a predetermined first reference orientation. The first reference orientation is the same as the orientation of the front-back axis 101a in the original basic posture, i.e., the orientation of front-back axis 103a of the torso 103. The first angle range A may be, for example, ±15 degrees (30 degrees total) centered on the first reference orientation. However, the first angle range A is not limited to this. The first angle range A is set within the range of orientations of the front-back axis 101a of the head 101 such that the front-back axis 101a does not move due to the force received from the exterior 200 when the up-and-down movement motor 41 is not performing angle control (in the first state). If the CPU 11 determines that the orientation of the front-back axis 101a of the head 101 is within the first angle range A, the CPU 11 controls the up-and-down movement motor 41 to be in the first state in which the rotation of the head 101 is not restricted. In other words, the power supply to the up-and-down movement motor 41 is stopped and the angle control is discontinued, so that no braking is applied to the rotation of the head 101 around the first rotation axis 401. When the orientation of the front-back axis 101a is within the first angle range A, the head 101 does not rotate around the first rotational axis 401 due to the force received from the exterior 200, thus suppressing unintended movement of the robot 1 while reducing power consumption of the up-and-down movement motor 41. On the other hand, if the CPU 11 determines that the orientation of the front-back axis 101a of the head 101 is not within the first angle range A, it controls the up-and-down movement motor 41 to be in the second state, which restricts the rotation of the head 101. In other words, the power supply to the up-and-down movement motor 41 is maintained and the angle control is made to keep the head 101 in a state where braking is applied to the rotation of the head 101 around the first rotation axis 401. This prevents the head 101 from rotating around the first rotation axis 401 due to forces received from the exterior 200. Switching the up-and-down movement motor 41 between the first state and the second state in this way corresponds to controlling the braking of the rotation in the up-and-down direction of the head 101, and is therefore also referred to as "braking control in the up-and-down direction" in the following.

When stopping the rotation of the head 101 around the second rotation axis 402, the CPU 11 determines whether or not the orientation of the left-right axis 101b of the head 101 (around the second rotation axis 402) is within the second angle range B shown in FIG. 10. The second angle range B includes a predetermined second reference orientation. The second reference orientation is the same as the orientation of the left-right axis 101b in the original basic posture, i.e., the left-right axis 103b of the torso 103. The second angle range B may be, for example, ±15 degrees (30 degrees total) centered on the second reference orientation. However, the second angle range B is not limited to this. The second angle range B may be different from the first angle range A. The second angle range B is set within the range of orientation of the left-right axis 101b of the head 101 such that the left-right axis 101b does not move due to the force received from the exterior 200 when the twist motor 42 is not performing angle control (in the first state). If the CPU 11 determines that the orientation of the left-right axis 101b of the head 101 is within the second angle range B, the CPU 11 controls the twist motor 42 to be in the first state in which the motor does not restrict the rotation of the head 101. In other words, the power supply to the twist motor 42 is stopped and the angle control is discontinued, so that no braking is applied to the rotation of the head 101 around the second rotation axis 402. When the orientation of the left-right axis 101b is within the second angle range B, the head 101 does not rotate around the second rotation axis 402 due to the force received from the exterior 200, thus suppressing unintended movement of the robot 1 while reducing power consumption of the twist motor 42. On the other hand, if the CPU 11 determines that the orientation of the left-right axis 101b of the head 101 is not within the second angle range B, it controls the twist motor 42 to be in the second state, which restricts the rotation of the head 101. In other words, the power supply to the twist motor 42 is maintained and the angle control is made to remain in a state where braking is applied to the rotation of the head 101 around the second rotation axis 402. This prevents the head 101 from rotating around the second rotation axis 402 due to forces received from the exterior 200. Switching the twist motor 42 between the first state and the second state in this way corresponds to controlling the braking of the head 101's rotation in the twist direction, and is therefore also referred to as "braking control in the twist direction" in the following.

The braking control in the up-and-down direction and the braking control in the twist direction are performed independently. Therefore, if the orientation of the front-back axis 101a of the head 101 is within the first angle range A and the orientation of the left-right axis 101b of the head 101 is not within the second angle range B, the up-and-down movement motor 41 is set to be in the first state and the twist motor 42 is set to be in the second state. If the orientation of the front-back axis 101a is not within the first angle range A and the orientation of the left-right axis 101b is within the second angle range B, the up-and-down movement motor 41 is set to be in the second state and the twist motor 42 is set to be in the first state. When the orientation of the front-back axis 101a is within the first angle range A and the orientation of the left-right axis 101b is within the second angle range B, the up-and-down movement motor 41 and the twist motor 42 are both set to be in the first state. If the orientation of the front-back axis 101a is not within the first angle range A and the orientation of the left-right axis 101b is not within the second angle range B, both the up-and-down movement motor 41 and the twist motor 42 are set to be in the second state. When one of the up-and-down movement motor 41 and the twist motor 42 is set to be in the second state, the other may also be set to be in the second state to restrict the rotation of the head 101 for both the first rotation axis 401 and the second rotation axis 402.

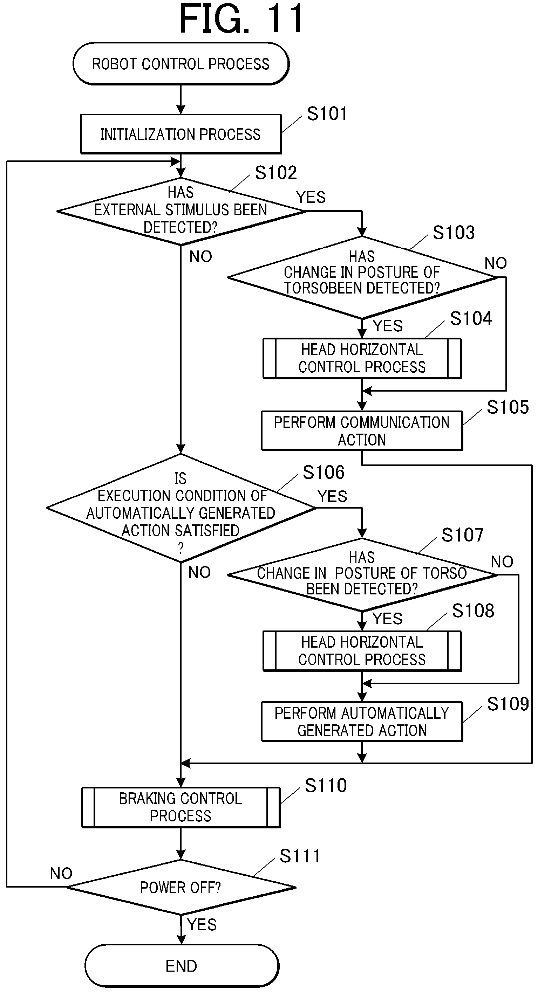

Referring now to FIGS. 11 through 13, the robot control process executed by the CPU 11 to achieve the above action of the robot 1 is described. The robot control process is started when the robot 1 is turned on. When the robot control process is started, the CPU 11 executes the initialization process (step S101). In the initialization process, the CPU 11 operates the up-and-down movement motor 41 and the twist motor 42 so that the robot 1 is in the basic posture. In other words, the head 101 is rotated by the up-and-down movement motor 41 so that the front-back axis 101a of the head 101 is parallel to the front-back axis 103a of the torso 103, and the head 101 is rotated by the twist motor 42 so that the left-right axis 101b of the head 101 is parallel to the left-right axis 103b of the torso 103. It also resets the offset values of the up-and-down movement motor 41 and the twist motor 42 to 0.

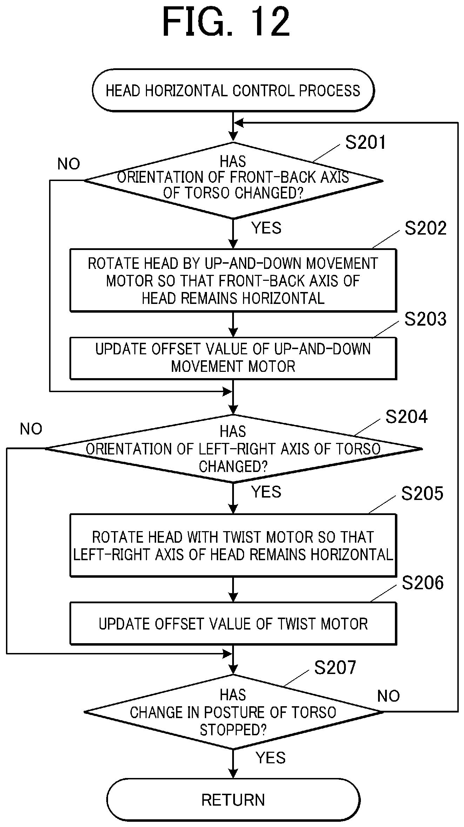

The CPU 11 determines whether or not the sensor unit 50 has detected the external stimulus described above (step S102) . If it is determined that an external stimulus is detected ("YES" in step S102), the CPU 11 determines whether or not a change in the posture of the torso 103 is detected (step S103). Here, the CPU 11 detects the orientation of each of the front-back axis 103a and the left-right axis 103b of the torso 103 based on the detection data of the acceleration sensor 52 and the gyro sensor 53, and determines that the posture of the torso 103 has changed when at least one of the front-back axis 103a and the left-right axis 103b has changed its orientation . If it is determined that the posture of the torso 103 has changed ("YES" in step S103), the CPU 11 executes the head horizontal control process (step S104). As shown in FIG. 12, when the head horizontal control process is started, the CPU 11 determines whether or not the orientation (angle with respect to the horizontal plane) of the front-back axis 103a of the torso 103 has changed (step S201). If it is determined that the orientation of the front-back axis 103a has changed ("YES" in step S201), the CPU 11 rotates the head 101 by the up-and-down movement motor 41 so that the front-back axis 101a of the head 101 remains horizontal (step S202). Here, the CPU 11 specifies the amount of change in the angle of the front-back axis 103a of the torso 103 with respect to the horizontal plane and rotates the front-back axis 101a of the head 101 by the same angle in the opposite orientation to the torso 103. The CPU 11 also updates the offset value of the up-and-down movement motor 41 to a value corresponding to the angle after the end of the rotation (step S203).

When step S203 is completed, or when it is determined in step S201 that the orientation of the front-back axis 103a of the torso 103 has not changed ("NO" in step S201), the CPU 11 determines whether or not the orientation of the left-right axis 103b of the torso 103 ( angle with respect to the horizontal plane) has changed or not (step S204). If it is determined that the orientation of the left-right axis 103b has changed ("YES" in step S204), the CPU 11 rotates the head 101 with the twist motor 42 so that the left-right axis 101b of the head 101 remains horizontal (step S205). Here, the CPU 11 specifies the amount of change in the angle of the left-right axis 103b of the torso 103 with respect to the horizontal plane, and rotates the left-right axis 101b of the head 101 by the same angle in the opposite orientation to the torso 103. The CPU 11 also updates the offset value of the twist motor 42 to a value corresponding to the angle after the end of the rotation (step S206).

When step S206 is completed, or when it is determined in step S204 that the orientation of the left-right axis 103b of the torso 103 has not changed ("NO" in step S204), the CPU 11 determines whether or not the change in posture of the torso 103 has stopped based on the detection data of the acceleration sensor 52 and the gyro sensor 53 (step S207). If the CPU 11 determines that the posture change of the torso 103 has not stopped ("NO" in step S207), the process returns to step S201, and if it determines that the posture change of the torso 103 has stopped ("YES" in step S207), the CPU 11 ends the head horizontal control process and the process returns to the robot control process in FIG. 11.

When the head horizontal control process of step S104 in FIG. 11 is completed, or when it is determined in step S103 that the posture of the torso 103 has not changed ("NO" in step S103), the CPU 11 In this case, the CPU 11 causes the robot 1 to perform the communication action corresponding to the external stimulus detected in step S102 (step S105). Here, the CPU 11 identifies the communication action corresponding to the detected external stimulus by referring to the action setting data 132. The CPU 11 then controls the up-and-down movement motor 41 and/or the twist motor 42 to rotate the head 101 and also causes the sound output unit 30 to output sound so that the robot 1 performs the communication action. When the communication action is completed, the CPU 11 moves the process to step S110.

If it is determined that no external stimulus is detected in step S102 ("NO" in step S102), the CPU 11 determines whether or not the execution condition for the automatically generated action is satisfied (step S106). The execution condition for the automatically generated action may be, for example, that a predetermined action waiting time has elapsed since the last executed communication action or automatically generated action was completed. The action waiting time can be determined as needed, but may be several tens of seconds to several minutes, for example. If it is determined that the execution condition for the automatically generated action is satisfied ("YES" in step S106), the CPU 11 determines whether or not a change in the posture of the torso 103 has been detected (step S107). If it is determined that the posture of the torso 103 has changed ("YES" in step S107), the CPU 11 executes the head horizontal control process in FIG. 12 (step S108). When the head horizontal control process of step S108 is completed, or when it is determined in step S107 that the posture of the torso 103 has not changed ("NO" in step S107), the CPU 11 causes the robot 1 to perform the automatically generated action (step S109). Here, the CPU 11 controls the up-and-down movement motor 41 and/or the twist motor 42 to rotate the head 101 and also causes the sound output unit 30 to output sound so that the robot 1 performs a predetermined automatically generated action or a randomly generated automatically generated action. When the automatically generated action is completed, the CPU 11 moves the process to step S110.

The communication action in step S105 and the automatically generated action in step S109 are performed based on the posture represented by the offset values of the up-and-down movement motor 41 and the twist motor 42 at that time. In other words, when the offset values of the up-and-down movement motor 41 and the twist motor 42 are both 0, the CPU 11 causes each action to be performed based on the basic posture shown in FIG. 2. When the offset value of at least one of the up-and-down movement motor 41 and the twist motor 42 is not 0, the CPU 11 causes each action to be performed based on the tentative basic posture in which the head 101 is rotated by an angle corresponding to the offset value.

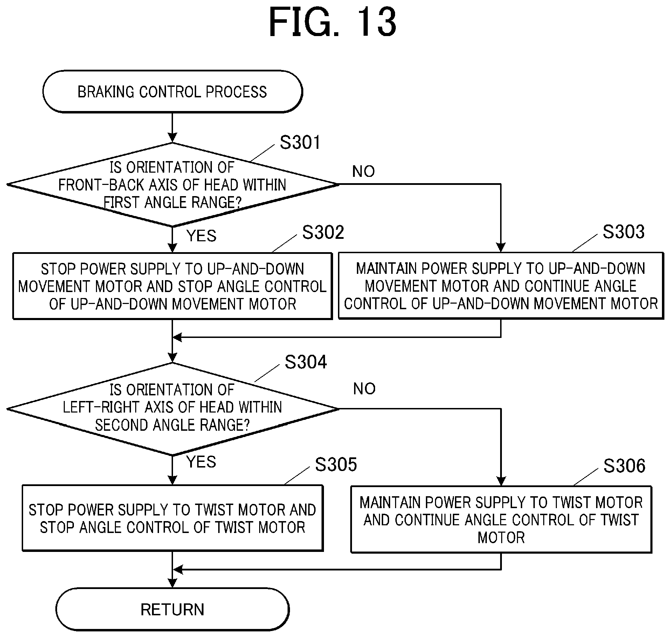

When either of steps S105 or S109 is completed, that is, when the operation of the robot 1 in these processes is completed and the rotation of the head 101 is stopped, the CPU 11 executes the braking control process to perform the braking control in the up-and-down direction and the braking control in the twist direction as described above (step S110) . As shown in FIG. 13, when the braking control process is started, the CPU 11 determines whether or not the orientation of the front-back axis 101a of the head 101 is within the first angle range A shown in FIG. 9 (step S301). If it is determined that the orientation of the front-back axis 101a is within the first angle range A ("YES" in step S301), the CPU 11 stops supplying power from the battery 71 to the up-and-down movement motor 41 and causes the angle control of the up-and-down movement motor 41 to stop (step S302). In other words, the CPU 11 controls the up-and-down movement motor 41 to be in a first state in which the motor does not restrict the rotation of the head 101 around the first rotation axis 401. On the other hand, if it is determined that the orientation of the front-back axis 101a is not within the first angle range A ("NO" in step S301), the CPU 11 maintains the power supply from the battery 71 to the up-and-down movement motor 41 and continues the angle control of the up-and-down movement motor 41 (step S303). In other words, the CPU 11 controls the up-and-down movement motor 41 to be in the second state in which the motor restricts the rotation of the head 101 around the first rotation axis 401.

When step S302 or step S303 is completed, the CPU 11 determines whether or not the orientation of the left-right axis 101b of the head 101 is within the second angle range B shown in FIG. 10 (step S304). If it is determined that the orientation of the left-right axis 101b is within the second angle range B ("YES" in step S304), the CPU 11 stops supplying power from the battery 71 to the twist motor 42 and causes the angle control of the twist motor 42 to stop (step S305). In other words, the CPU 11 controls twist motor 42 to be in the first state in which the motor does not restrict the rotation of head 101 around the second rotation axis 402. On the other hand, if it is determined that the orientation of the left-right axis 101b is not within the second angle range B ("NO" in step S304), the CPU 11 maintains the power supply from the battery 71 to the twist motor 42 and continues the angle control of the twist motor 42 (step S306). In other words, the CPU 11 controls the twist motor 42 to be in the second state in which the motor restricts the rotation of head 101 around the second rotation axis 402. When step S305 or S306 is completed, the CPU 11 ends the braking control process and returns the process to the robot control process in FIG. 11.

After the braking control process (step S110) in FIG. 11 is completed, the CPU 11 determines whether or not an operation to turn off the power of the robot 1 is performed (step S111). If the CPU 11 determines that no such operation has been performed ("NO" in step S111), the process returns to step S102, and if it determines that such operation has been performed ("YES" in step S111), the robot control process ends. In FIG. 11, the example shows how head horizontal control (steps S104 and S108) is performed when the communication action and automatically generated action are performed. However, head horizontal control may be performed when a change in the posture of the torso 103 is detected during other actions, such as the breathing action.

As described above, the robot 1 in the present embodiment includes a torso 103, a head 101 attached to the torso 103 in a rotatable state around the first rotation axis 401 and second rotation axis 402, an up-and-down movement motor 41 to rotate the head 101 around the first rotation axis 401, a twist motor 42 to rotate the head 101 around the second rotation axis 402, and a CPU 11. The CPU 11 controls the orientation of the head 101 around the first rotation axis 401 and the second rotation axis 402 by controlling the operation of the up-and-down movement motor 41 and the twist motor 42. When stopping the rotation of the head 101 around the first rotation axis 401, the CPU 11 determines whether or not the orientation of the front-back axis 101a (orientation of the head 101) is within the first angle range A. If the CPU 11 determines that the orientation of the front-back axis 101a is within the first angle range A, the CPU 11 controls the up-and-down movement motor 41 to be in the first state in which the motor does not restrict the rotation of the head 101. If the CPU 11 determines that the orientation of the front-back axis 101a is not within the first angle range A, the CPU 11 controls the up-and-down movement motor 41 to be in the second state in which the motor restricts the rotation of the head 101. When stopping the rotation of the head 101 around the second rotation axis 402, the CPU 11 determines whether or not the orientation of the left-right axis 101b (orientation of the head 101) is within the second angle range B. If the CPU 11 determines that the orientation of the left-right axis 101b is within the second angle range B, the CPU 11 controls the twist motor 42 to be in the first state in which the motor does not restrict the rotation of the head 101. If the CPU 11 determines that the orientation of the left-right axis 101b is not within the second angle range B, the CPU 11 controls the twist motor 42 to be in the second state in which the motor restricts the rotation of the head 101. This allows the up-and-down movement motor 41 and/or the twist motor 42 to be in the second state to restrict the rotation of the head 101 when the head 101 may make unintended movements due to external forces or its own weight (when the front-back axis 101a is not within the first angle range A, and/or the left-right axis 101b is not within the second angle range B). By doing so, unintended movement of the head 101 can be restrained.

Thus, it is possible to suppress the robot 1 from moving in a manner that is uncomfortable for a living creature. When the head 101 is unlikely to make unintended movements due to external forces or its own weight (when the front-back axis 101a is within the first angle range A and/or the left-right axis 101b is within the second angle range B), the up-and-down movement motor 41 and/or the twist motor 42 can be set to the first state to release the restriction of the head 101's rotation. By doing so, the power consumption of the up-and-down movement motor 41 and the twist motor 42 can be reduced.

The up-and-down movement motor 41 and the twist motor 42 are servo motors capable of performing angle control to rotate the head 101 in the indicated orientation and maintain the orientation. The first state is the state in which the up-and-down movement motor 41 and the twist motor 42 do not perform angle control, and the second state is the state in which the up-and-down movement motor 41 and the twist motor 42 perform angle control. This allows the angle control of the servo motor to be used to restrict the rotation of the head 101. The restriction of rotation of the head 101 can be released by stopping the angle control. If the CPU 11 determines that the orientation of the front-back axis 101a is within the first angle range A, it controls the up-and-down movement motor 41 to be in the first state by stopping the power supply to the up-and-down movement motor 41. If the CPU 11 determines that the orientation of the left-right axis 101b is within the second angle range B, it controls the twist motor 42 to be in the first state by stopping the power supply to the twist motor 42. This allows switching from the second state to the first state with a simple control that turns off the power supply to the up-and-down movement motor 41 and/or the twist motor 42.

The CPU 11 rotates the head 101 by the up-and-down movement motor 41 and the twist motor 42 so that the posture of the head 101 is maintained when the posture of the torso 103 changes. The CPU 11 determines whether or not the orientation of the front-back axis 101a of the head 101 is within the first angle range A and determines whether or not the orientation of the left-right axis 101b of the head 101 is within the second angle range B when the posture change of the torso 103 has stopped. This allows the robot 1 to move in a manner that mimics the recovery reaction of a living creature, making the robot 1 look more like a living creature. Even if the orientation of the head 101 relative to the torso 103 is different from the basic posture at the end of the movement that mimics the recovery reaction, the unintended movement of the head 101 can be suppressed. The robot 1 also includes an exterior 200 covering the torso 103 and head 101. The first angle range A is set within the range of orientation of the front-back axis 101a of the head 101 such that the front-back axis 101a does not move due to the force received from the exterior 200 when the up-and-down movement motor 41 is in the first state. The second angle range B is set within the range of orientation of the left-right axis 101b of the head 101 such that the left-right axis 101b does not move due to the force received from the exterior 200 when the twist motor 42 is in the first state. This prevents unintended movement of the head 101 due to forces received from the exterior 200.

Since the robot 1 has the torso 103 as a base part and the head 101 as a movable part, it is possible to suppress unintended movement of the head 101 in the robot 1. According to the control method of the robot in the present embodiment, the CPU 11 of the robot 1 performs the control described above to suppress unintended movement of the head 101. The program 131 in the present embodiment can also suppress unintended movement of the head 101 by causing the CPU 11 to perform the control described above.

The present disclosure is not limited to the above embodiment, but can be modified in various ways. For example, in the above embodiment, as an example of the manner in which the actuator in the second state restricts the rotation of the movable part, the rotation of the head 101 is restricted by angle control of the servo motor. However, the manner is not limited to this. For example, a brake may be provided on the actuator to stop the rotation of the head 101 independently of the angle control, and the CPU 11 may control the brake to restrict the rotation of the head 101. In the second state, the positional relationship between the head 101 and the torso 103 may be fixed by a predetermined locking mechanism. The specific configuration of the locking mechanism is not limited, but may be, for example, a mechanism in which a convex portion fixed directly or indirectly to the torso 103 is engaged with a concave portion provided in a position in conjunction with the head 101.

Although the example shows a configuration with two actuators (up-and-down movement motor 41 and twist motor 42) that rotate the movable part around two rotation axes, it is not limited to this configuration, and a single actuator may be used to rotate the movable part around a single rotation axis.

The orientation of the head 101 around the first rotation axis 401 is not limited to the orientation of the front-back axis 101a, but may be the orientation of any axis fixed to the head 101 and intersecting the first rotation axis 401. The orientation of the head 101 around the second rotation axis 402 is not limited to the orientation of the left-right axis 101b, but may be the orientation of any axis fixed to the head 101 and intersecting the second rotation axis 402.

The servo motor operated by electric power is shown as an example of an actuator, but the actuator is not limited to this. The actuator may be any actuator that can rotate the movable part and can switch between the first state in which the motor does not restrict the rotation of the movable part and the second state in which the motor restricts the rotation of the movable part. For example, the actuator may be an electromagnetic actuator operated by magnetic force, a hydraulic actuator operated by hydraulic pressure, a pneumatic actuator operated by air pressure, etc.

An example of the robot 1 that has the exterior 200 from the beginning is used for explanation, but the configuration is not limited to this. For example, the same control as in the above embodiment may be performed in a case where a user later attaches an exterior that imitates clothing, an exterior to protect the main body 100, etc., to the robot 1 that consists only of the main body 100.

The present disclosure may also be applied to the robot 1 not including the exterior 200. For example, in a case where the movable part moves due to its own weight when the orientation of the movable part of the robot 1 is out of the predetermined angle range, the movement due to its own weight can be suppressed by setting the actuator to the second state.

The configuration of the robot 1 is not limited to that illustrated in FIGS. 1 through 3. For example, the robot 1 may be a robot that imitates a real living creature such as a person, animal, bird, or fish, a robot that imitates a non-existent living creature such as a dinosaur, or a robot that imitates a fictional living creature.

The above description also discloses an example of using flash memory in the storage unit 13 as a computer-readable medium for the program of the present disclosure, but the medium is not limited to this example.

As other computer-readable media, information recording media such as HDD (Hard Disk Drive), SSD (Solid State Drive), CD-ROM, etc. can be applied.

Carrier wave is also applicable to the present disclosure as a medium for providing program data for the present disclosure via communication lines. Also, it is possible to change the detailed configuration and detailed operation of each component of the robot 1 in the above embodiment to the extent not to depart from the purpose of the present disclosure. Although embodiments of the present disclosure have been described, the scope of the present disclosure is not limited to the embodiments described above, but includes the scope of the invention described in the claims and their equivalents.

## Claims

1. A robot comprising:
a base part;
a movable part attached to the base part in a rotatable state around a predetermined rotation axis;
an actuator to rotate the movable part around the rotation axis; and
one or more processors that control an orientation of the movable part around the rotation axis by controlling an operation of the actuator, wherein
the one or more processors determine whether the orientation of the movable part is within a predetermined angle range including a predetermined reference orientation,
in response to determining that the orientation is within the predetermined angle range, the one or more processors control the actuator to be in a first state in which the actuator does not restrict rotation of the movable part, and
in response to determining that the orientation is not within the predetermined angle range, the one or more processors control the actuator to be in a second state in which the actuator restricts rotation of the movable part.

2. The robot according to claim 1, wherein
the actuator is a servo motor capable of rotating the movable part in an indicated orientation and performing angle control to maintain the orientation,
the first state is a state in which the servo motor does not perform the angle control, and
the second state is a state in which the servo motor performs the angle control.

3. The robot according to claim 2, wherein
in response to the determining that the orientation is within the predetermined angle range, the one or more processors control the servo motor to be in the first state by stopping power supply to the servo motor.

4. The robot according to any one of claims 1 to 3, wherein
the one or more processors rotate the movable part around the rotation axis by the actuator so that a posture of the movable part is maintained when a posture of the base part has changed, and
the one or more processors determine whether the orientation of the movable part is within the predetermined angle range when a change in the posture of the base part has stopped.

5. The robot according to any one of claims 1 to 4, further comprising
an exterior covering the base part and the movable part, wherein
the predetermined angle range is set within a range of the orientation of the movable part such that the movable part is not moved by a force received from the exterior when the actuator is in the first state.

6. The robot according to any one of claims 1 to 5, wherein
the base part is a torso of the robot, and
the movable part is a head of the robot.

7. The robot according to any one of claims 1 to 6, wherein
the rotation axis includes a first rotation axis and a second rotation axis,
the actuator includes:
a first actuator to rotate the movable part around the first rotation axis; and
a second actuator to rotate the movable part around the second rotation axis that intersects the first rotation axis,
the orientation includes a first orientation and a second orientation,
the predetermined angle range includes a predetermined first angle range including a first reference orientation and a predetermined second angle range including a second reference orientation,
when the one or more processors stop rotation of the movable part around the first rotation axis,
the one or more processors determine whether the first orientation of the movable part around the first rotation axis is within the first angle range,
in response to determining that the first orientation is within the first angle range, the one or more processors control the first actuator to be in the first state,
in response to determining that the first orientation is not within the first angle range, the one or more processors control the first actuator to be in the second state, and
when the one or more processors stop rotation of the movable part around the second rotation axis,
the one or more processors determine whether the second orientation of the movable part around the second rotation axis is within the second angle range,
in response to determining that the second orientation is within the second angle range, the one or more processors control the second actuator to be in the first state, and
in response to determining that the second orientation is not within the second angle range, the one or more processors control the second actuator to be in the second state.

8. A robot control method for a robot including: a base part; a movable part attached to the base part in a rotatable state around a predetermined rotation axis; and an actuator to rotate the movable part around the rotation axis, the method comprising:
controlling an orientation of the movable part around the rotation axis by controlling an operation of the actuator;
when stopping rotation of the movable part, determining whether the orientation of the movable part is within a predetermined angle range including a predetermined reference orientation;
in response to determining that the orientation is within the predetermined angle range, controlling the actuator to be in a first state in which the actuator does not restrict rotation of the movable part; and
in response to determining that the orientation is not within the predetermined angle range, controlling the actuator to be in a second state in which the actuator restricts rotation of the movable part.

9. A program for a computer provided in a robot including: a base part; a movable part attached to the base part in a rotatable state around a predetermined rotation axis; and an actuator to rotate the movable part around the rotation axis, the program causing the computer to function as
a processor that controls an orientation of the movable part around the rotation axis by controlling an operation of the actuator, wherein
when the processor stops rotation of the movable part, the processor determines whether the orientation of the movable part is within a predetermined angle range including a predetermined reference orientation,
in response to determining that the orientation is within the predetermined angle range, the processor controls the actuator to be in a first state in which the actuator does not restrict rotation of the movable part, and
in response to determining that the orientation is not within the predetermined angle range, the processor controls the actuator to be in a second state in which the actuator restricts rotation of the movable part.
